# EUROPÄISCHE PATENTANMELDUNG

(11) **EP 2 187 188 A1**
(43) Veröffentlichungstag der Anmeldung: **19.05.2010**
(21) Anmeldenummer: 08169032.3
(22) Anmeldetag: 13.11.2008
(51) Int. Cl.: G01J 3/46, G01N 21/25, G02B 17/08

(54) **Lichtmessvorrichtung**

(71) Anmelder: X-Rite Europe GmbH, 8105 Regensdorf (CH)
(72) Erfinder: Frick, Beat, 8107 Buchs (CH)
(74) Vertreter: Schwabe - Sandmair - Marx

(57) **Zusammenfassung**

Eine zum Einbau in die Tastaturplatte eines Notebook Rechners geeignete Vorrichtung zur Ausmessung des LCD-Monitors des Rechners umfasst eine lichtelecktrische Wandleranordnung (LSA), welche auf sie auftreffendes Messlicht in entsprechende elektrische Signale unwandelt, und eine integrierte, als monolithischer Optikblock (OB) aus transparentem Kunststoff ausgebildete Optikanordnung, welche von einem Messfleck des auszumessenden Monitors unter einem definierten Winkelbereich um die Normale auf den Messfleck ausgehendes Messlicht auf die Wandleranordnung (LSA) führt. Der Optikblock umfasst eingangsseitig eine fokussierende optische Fläche (10) und ausgangsseitig eine der aktiven Fläche der Wandleranordnung (LSA) grössenmässig angepasste und dieser zugewandte Austrittsfläche (40) und dazwischen eine Umlenkanordnung (20,30), so dass der Strahlengang des Messlichts zwischen der fokussierenden optischen Fläche (10) und der Austrittsfläche (40) gefaltet verläuft. Die Austrittsfläche (40) ist in oder nahe der Brennebene der fokussierenden optischen Fläche (10) angeordnet und es sind Blendenmittel (61, 90) vorgesehen, um ausserhalb des definierten Winkelbereichs in die fokussierende optische Fläche (10) eintretendes Messlicht von der Wandleranordnung (LSA) fernzuhalten. Durch die Integration aller optischen Komponenten in den Optikblock sowie den gefalteten Strahlengang mit der Austrittsfläche nahe der Brennebene der fokussierenden optischen Fläche können bei einfacher und kostengünstiger Verstellbarkeit alle messtechnischen Anforderungen erfüllt und insbesondere auch ein geringes Bauvolumen erreicht werden.

## Beschreibung

Die Erfindung betrifft eine Lichtmessvorrichtung zur Ausmessung eines leuchtenden Messobjekts, insbesondere eines Bildschirms, gemäss dem Oberbegriff des unabhängigen Anspruchs.

Farbmanagement findet immer weitere Verbreitung und kommt im Zuge der immer besser werdenden LCD Monitoren auch bei mit solchen Monitoren ausgestatteten Rechnern, speziell auch Notebook Rechnern, zum Einsatz. Eine Voraussetzung dafür sind Messgeräte, welche die farblichen Darstellungseigenschaften von LCD Monitoren ausreichend genau erfassen können. Besonders wünschenswert wäre eine Lichtmessvorrichtung, die unmittelbar in die Tastaturplatte des Notebook Rechners eingebaut werden und dessen Monitor bei geschlossenem Rechner ausmessen kann.

Eine für diese Zwecke geeignete Lichtmessvorrichtung muss einer Reihe von relativ scharfen Anforderungen genügen. Um eine repräsentative Messung durchführen zu können und gegenüber kleinen lokalen Variationen unempfindlich zu sein, muss die Lichtmessvorrichtung einen relativ grossen Messfleck von typisch etwa 6 mm Durchmesser abdecken. Aufgrund der starken Winkelabhängigkeit der Helligkeit und Farbe von LCD Monitoren darf die Lichtmessvorrichtung nur in einem relativ engen Winkelbereich von typisch 3°-6° um die Normale auf die Monitorfläche messen, d.h. nur Messlicht aus diesem engen Winkelbereich auswerten. Ferner darf die Lichtmessvorrichtung aufgrund der beengten Platzverhältnisse in der Tastaturplatte des Rechners nur sehr kleine Abmessungen, insbesondere in der Bauhöhe (senkrecht zur Ebene der Tastaturplatte) aufweisen, wobei typische Maximalabmessungen ungefähr 14*14*8 mm (Länge, Breite, Höhe) betragen. Und schliesslich muss die Lichtmessvorrichtung aus wirtschaftlichen Gründen auch extrem kostengünstig herstellbar sein.

Aus dem Dokument EP1643224B1 ist eine Lichtmessvorrichtung für LCD Monitore bekannt, die zur Montage am Monitor bestimmt ist. Diese Lichtmessvorrichtung ist mit einem langen Lichttunnel ausgestattet und erfüllt dadurch zwar die Anforderungen an den Messwinkelbereich, sie ist jedoch aufgrund der optischen und mechanischen Konzeption viel zu gross für die Integration in die Tastaturplatte eines Notebook Rechners. Ausserdem kann diese Lichtmessvorrichtung keinen ausreichend grossen Messfleck erfassen und zudem ist ihre Lichteffizienz relativ gering.

Durch die Erfindung soll nun eine Lichtmessvorrichtung zur Ausmessung des LCD Monitors eines Notebook Rechners geschaffen werden, die den vorstehend aufgezählten Anforderungen genügt und insbesondere baulich ausreichend klein ist, um in die Tastaturplatte des Notebook Rechners eingebaut zu werden und so den Monitor bei geschlossenem Rechner auszumessen können.

Diese der Erfindung zugrundeliegende Aufgabe wird durch die im unabhängigen Anspruch definierte Lichtmessvorrichtung gelöst. Weiterbildungen und besonders vorteilhafte Ausgestaltungen der erfindungsgemässen Lichtmessvorrichtung sind Gegenstand der abhängigen Ansprüche.

Der wesentlichste Gedanke der Erfindung besteht in dem einfach oder vorzugsweise mehrfach gefaltetem Messstrahlengang und der Integration aller optischen Komponenten in einen gemeinsamen Optikblock. Dadurch lassen sich für die Lichtmessvorrichtung extrem kleine körperliche Abmessungen realisieren und die Herstellung der optischen Komponenten und damit der gesamten Lichtmessvorrichtung kann besonders kostengünstig erfolgen. Durch die Anordnung der Austrittsfläche im Fokus der eingangsseitigen fokussierenden optischen Fläche oder in der Nähe desselben und die Mittel zur Ausblendung unerwünschter Strahlenanteile können die für die Ausmessung von LCD-Monitoren geforderten Bedingungen bezüglich Einfallswinkelbereich und Messfleckgrösse trotz minimaler Abmessungen realisiert werden.

Vorteilhafterweise erfolgt die Faltung des Strahlengangs unter Bedingungen der Totalreflexion. Dadurch entfällt die sonst erforderliche relativ aufwändige Verspiegelung der Spiegelflächen und die Herstellung der Vorrichtung wird wesentlich vereinfacht. Um die Bedingungen der Totalreflexion zu realisieren, sind die für die Strahlengangumlenkung erforderlichen Umlenkspiegel vorteilhafterweise als Doppelspiegel mit je zwei senkrecht zu einander stehenden Spiegelflächen ausgebildet.

Der Strahlengang ist vorzugsweise zweimal gefaltet und weist vorzugsweise einen Z- oder U-förmigen Verlauf auf. Diese Konfiguration ist besonders für den Einbau der Lichtmessvorrichtung in die Tastaturplatte eines Notebook Rechners von Vorteil.

Die Blendenmittel zur Blockierung ausserhalb des zugelassenen Winkelbereichs liegender Messlichtanteile umfassen vorzugsweise ein absorbierend wirkendes, insbesondere schwarzes Einlegeteil, das den Lichtausgang des Optikblocks ringförmig umschliesst. Ein Einlegeteil ist fertigungstechnisch günstiger als die Beschichtung von Flächen des Optikblocks mit absorbierendem Material.

Vorteilhafterweise ist der gesamte Optikblock mit einem IR absorbierenden, insbesondere bläulichen Farbstoff eingefärbt. Dies ist fertigungstechnisch einfacher als die Integration eines separaten IR-Filters.

Im Folgenden werden Ausführungsbeispiele der erfindungsgemässen Lichtmessvorrichtung anhand der Zeichnung näher erläutert. In der Zeichnung zeigen:
- Fig. 1: eine Schrägansicht eines ersten Ausführungsbeispiels der erfindungsgemässen Lichtmessvorrichtung,
- Fig. 2: eine Unteransicht des Optikblocks der Lichtmessvorrichtung der Fig. 1,
- Fig. 3: einen Schnitt durch die Lichtmessvorrichtung nach der Ebene III-III der Fig. 1,
- Fig. 4-5: je eine Ansicht analog Fig. 3 mit eingezeichneten Strahlengängen,
- Fig. 6: die Lichtmessvorrichtung der Fig. 1 bei abgenommenem Optikblock,
- Fig. 7: einen Schnitt durch den Optikblock der Lichtmessvorrichtung nach der Ebene VII-VII der Fig. 1,
- Fig. 8: eine Schnittdarstellung des Optikblocks eines zweiten Ausführungsbeispiels der Lichtmessvorrichtung,
- Fig. 9: den Optikblock der Lichtmessvorrichtung der Fig. 8 in Schrägansicht,
- Fig. 10: eine explodierte Schrägansicht analog Fig. 9,
- Fig. 11: eine Schrägansicht von unten des zweiten Ausführungsbeispiels der erfindungsgemässen Lichtmessvorrichtungr
- Fig. 12: eine explodierte Schrägansicht des Lichtmessvorrichtung analog Fig. 11,
- Fig. 13: eine Schrägansicht des Optikblocks eines dritten Ausführungsbeispiels der erfindungsgemässen Lichtmessvorrichtung,
- Fig. 14: eine Schrägansicht analog Fig. 13 mit eingezeichneten Lichtwandlern,
- Fig. 15: eine Prinzipdetailskizze eines weiteren Ausführungsbeispiels des erfindungsgemässen Lichtmessvorrichtung,
- Fig. 16-17: je eine Skizze zur Erläuterung des Einbaus der Lichtmessvorrichtung in einen Notebook-Rechner,
- Fig.18-19: je eine Skizze von beispielsweisen Filter-Konfigurationen und
- Fig. 20: ein Prinzipschema der elektronischen Komponenten der Lichtmessvorrichtung.

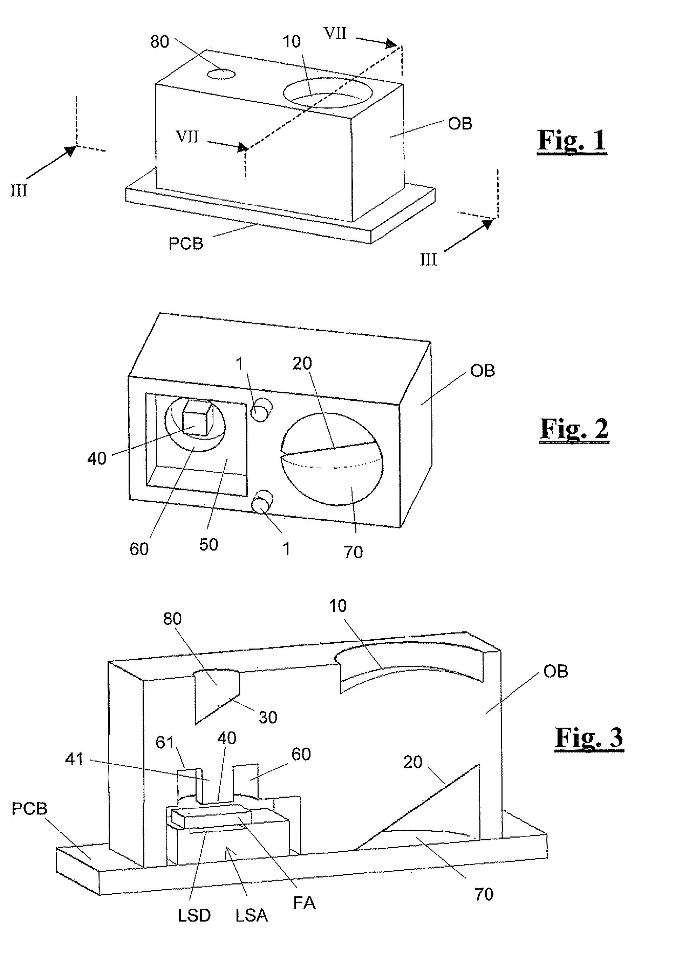

Der prinzipielle Aufbau der erfindungsgemässen Lichtmessvorrichtung ist aus den ein erstes Ausführungsbeispiel (Aufbauvariante) darstellenden Figuren 1-7 und 16 ersichtlich.

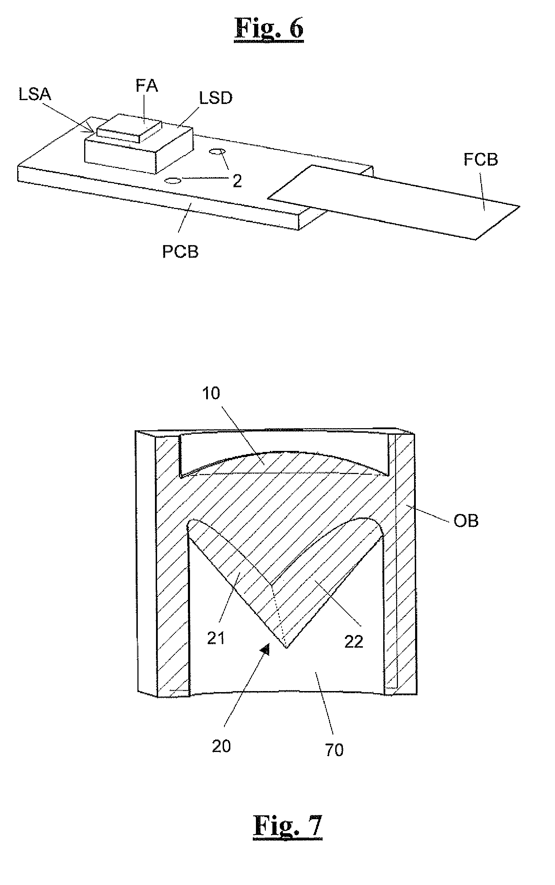

Die Lichtmessvorrichtung umfasst eine Leiterplatte PCB, auf der eine lichtelektrische Wandleranordnung LSA sowie eine Optikanordnung in Form eines im Wesentlichen quadrischen monolithischen Optikblocks OB aus transparentem Kunststoff montiert sind. Ein flexibles Leiterband FCB dient zur elektrischen Verbindung der auf der Leiterplatte befindlichen Komponenten nach aussen. Die Wandleranordnung LSA und das flexible Leiterband FCB sind am besten in Fig. 6 erkennbar. Die Leiterplatte PCB kann selbst auch flexibel oder begrenzt flexibel ausgebildet sein bzw. überhaupt mit der flexiblen Leiterbahn FCB einstückig sein. Zur passgenauen gegenseitigen Positionierung von Leiterplatte PCB und Optikblock OB und dadurch zur Vermeidung von örtlichen Justierungen sind mechanische Ausrichtungselemente z.B. in Form von zwei Stiften 1 an der Unterseite des Optikblocks (Fig. 2) und zwei die Stifte 1 aufnehmenden Passlöchern 2 in der Leiterplatte vorgesehen (Fig. 6). Die Wandleranordnung LSA umfasst einen lichtelektrischen Sensor LSD z.B. in Form eines handelsüblichen CCD- oder CMOS-Sensorfelds und kann durch eine vorgeschaltete (oder integrierte) Filteranordnung FA auf unterschiedliche Farbkanäle sensibilisiert sein (Figuren 3 und 6). Auf der Leiterplatte PCB ist ferner ein nicht dargestellter Prozessor angeordnet, der den Sensor LSD ansteuert und die von diesem erzeugten elektrischen Messsignale verarbeitet. Der Prozessor kann auch eine Schnittstelle, z.B. eine USB-Schnittstelle zur Kommunikation mit einem übergeordneten Rechner zur Verfügung stellen. Auf die Wandleranordnung LSA wird weiter unten noch näher eingegangen.

Die Figuren 2,3 und 7 zeigen den Aufbau des Optikblocks OB. Dieser enthält in integrierter Form an seiner Oberseite eingangsseitig eine fokussierende, hier im Beispiel sphärische optische Fläche 10, eine Umlenkanordnung in Form eines ersten und eines zweiten Umlenkspiegels 20 bzw. 30 und einen stabförmigen Lichtausgang 41 mit einer Austrittsfläche 40 am freien Ende des Lichtausgangs. Die fokussierende Fläche 10 könnte auch als Fresnel Linse, Freiformfläche, diffraktive Linse oder einfachste sphärische Linse ausgebildet sein. Unabhängig von der konkreten Ausgestaltung ist die fokussierende Fläche im Folgenden aber der Einfachheit halber als Eingangslinse bezeichnet. An der Unterseite des Optikblocks OB befindet sich eine Aussparung 50, die die Wandleranordnung LSA aufnimmt. Innerhalb der Aussparung 50 befindet sich eine weitere, ringförmige Aussparung 60, die den stabförmigen Lichtausgang 41 bildet. Die Austrittsfläche 40 liegt dem aktiven Bereich (Lichteintrittsfenster) des Wandlers LSD gegenüber und ist diesem dimensionsmässig angepasst (typisch etwa 1mm Durchmesser). Die gekrümmte Frontfläche der Eingangslinse 10 ist gegenüber der Deckfläche des Optikblocks etwas versenkt angeordnet. Die Umlenkspiegel 20 und 30 sind jeweils durch freigestellte und deshalb spiegelnde Flächen in Aussparung 70 bzw. 80 an der Oberseite bzw. der Unterseite des Optikblocks OB gebildet.

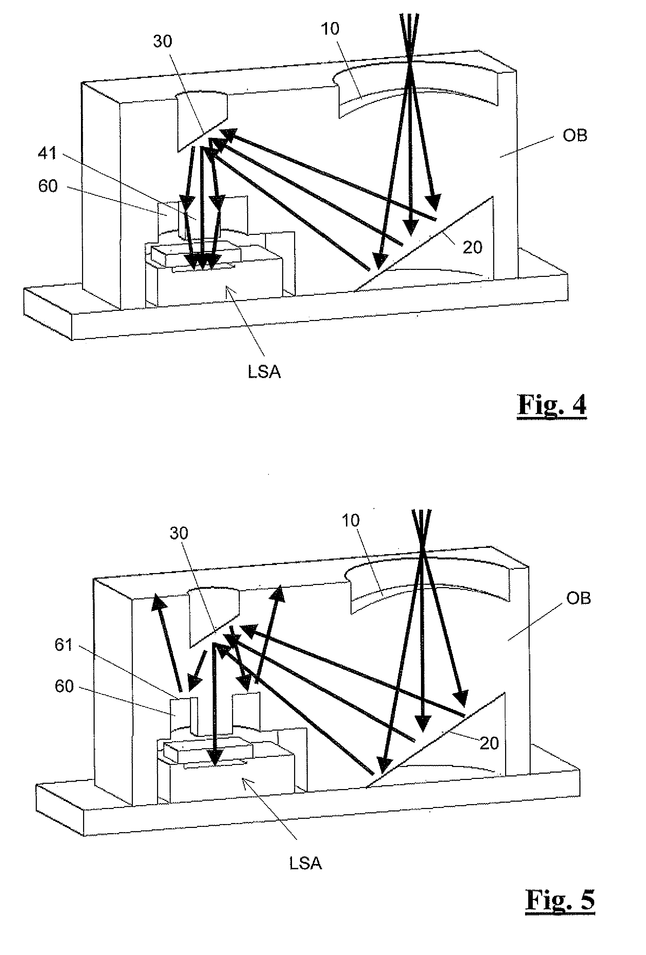

In den Figuren 4 und 5 ist der Strahlengang des Messlichts durch den Optikblock OB dargestellt. Wie man erkennt, verläuft der Strahlengang von der Eingangslinse 10 bis zur Austrittsfläche 40 im Wesentlichen Z-förmig, er ist also zweimal gefaltet. Die Austrittsfläche 40 ist in oder nahe der Brennebene der Eingangslinse 10 angeordnet. Der Optikblock OB ist so ausgelegt, dass das von einem im Durchmesser typisch etwa 6 mm grossen Messfleck des auszumessenden Bildschirms (Messobjekts) ausgehende Messlicht auf die Austrittsfläche von rund 1 mm Durchmesser gebündelt wird. Messlicht, das unter einem definierten Winkelbereich von etwa +/-3° - +/- 6° um die optische Achse der Eingangslinse 10 in den Optikblock OB eintritt, gelangt nach der zweimaligen Umlenkung vollständig in den Lichtausgang 41, verlässt diesen durch die Austrittsfläche 40 und beaufschlagt dann den Wandler LSD (Fig. 4). Licht ausserhalb des genannten definierten Winkelbereichs trifft ausserhalb des Lichtausgangs 41 auf die durch den Boden der den Lichtausgang 41 umschliessenden Aussparung 60 gebildeten Ringfläche 61 und wird von dieser reflektiert. Diese Ringfläche 61 bildet also eine Blende, welche ausserhalb des definierten Winkelbereichs in die Eingangslinse eintretendes Messlicht von der Wandleranordnung LSA bzw. deren Sensor LSD fernhält (Fig. 5).

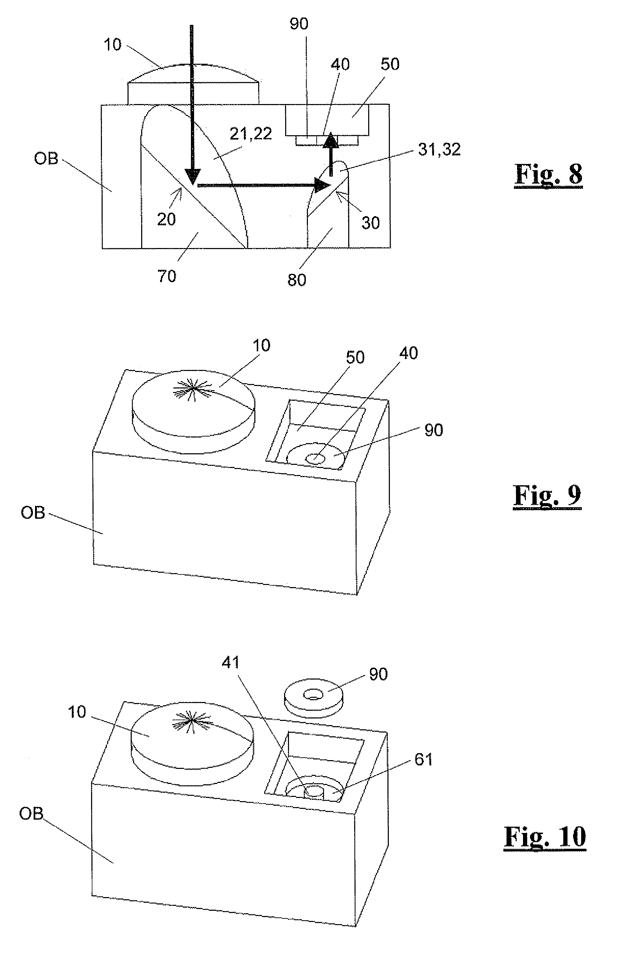

Zur Vermeidung von unkontrollierten Mehrfachreflexionen innerhalb des Optikblocks OB ist es von Vorteil, wenn die die Blende bildende Ringfläche 61 mit einer absorbierenden (schwarzen) Beschichtung versehen ist. Herstellungsmässig besonders einfach zu realisieren ist dies durch ein ringförmiges schwarzes Einlegeteil 90, das den Lichtaustrittsstab 41 umgibt und an der Ringfläche 61 anliegt, so wie dies im Zusammenhang mit dem zweiten Ausführungsbeispiel in den Figuren 9 und 10 dargestellt ist.

Die Ausblendung des ausserhalb des definierten Winkelbereichs in die Eingangslinse eintretenden Messlichts kann allgemein dadurch erreicht werden, dass die Umgebung der Austrittsfläche lichtundurchlässig ausgebildet ist, so dass die Austrittsfläche von einer Ringblende umschlossen ist. Dies kann wie vorstehend beschrieben oder durch Anbringung (Überspritzung oder Bemalung) einer lichtundurchlässigen (schwarzen) Beschichtung rund um die Austrittsfläche realisiert sein. Alternativ oder zusätzlich kann die Umgebung der Austrittsfläche auch so facettiert (abgeschrägt) ausgebildet sein, dass dort auftreffende Lichtstrahlen totalreflektiert und auf diese Weise ausgeblendet werden. Die vorstehend beschriebene Variante mit einer Ringblende in Form eines lichtundurchlässigen ringförmigen Einlegeteils, das lose oder verklebt vertieft angebracht sein kann, ist jedoch herstellungstechnisch besonders vorteilhaft.

Die Umlenkspiegel 20 und 30 können im Prinzip durch beliebig ausgebildete Spiegelflächen realisiert sein. Besonders vorteilhaft ist es jedoch, wenn die Umlenkung des Strahlengangs unter den Bedingungen der Totalreflexion erfolgt, weil dann keine spiegelnde Beschichtung der Spiegelflächen erforderlich ist und sich die Herstellung des Optikblocks OB dadurch wesentlich vereinfacht. Die für Optikanwendungen üblicherweise eingesetzten transparenten Kunststoffe haben einen Brechungsindex von ca. 1.5, wodurch sich beim Übergang zu Luft ein Totalreflexionswinkel von ca. 42° ergibt. Von einer um 45° geneigten Spiegelfläche wird daher ein divergentes Strahlenbündel nicht vollständig totalreflektiert. Deshalb sind die Umlenkspiegel 20 und 30 gemäss einem weiteren wichtigen Aspekt der Erfindung jeweils als Doppelspiegel mit zwei senkrecht aufeinander stehenden Spiegelflächen 21 und 22 bzw. 31 und 32 ausgebildet, wobei die Schnittkante der beiden Spiegelflächen jeweils in der optischen Achse des Strahlengangs liegen. Innerhalb jedes Umlenkspiegels bzw. Doppelspiegels erfolgt jeweils eine doppelte Strahlumlenkung über beide Spiegelflächen. Dadurch wird jeweils der gesamte Strahlengang totalreflektiert. Die Figur 7 verdeutlicht die Konfiguration der Doppelspiegel am Beispiel des eingangsseitigen Umlenkspiegels 20.

Die üblicherweise eingesetzten lichtelektrischen Sensoren sind typischerweise IR- und Rot-empfindlich. Deshalb ist es erforderlich, an geeigneter Stelle im Messstrahlengang zusätzlich ein integrales IR-Filter vorzusehen, z.B. ein Massefilter aus bläulichem Glas. Gemäss einem weiteren vorteilhaften Aspekt der Erfindung kann die IR-Filterung aber auch dadurch erreicht werden, dass der gesamte Optikblock OB mit einem IR absorbierenden Farbstoff eingefärbt wird.

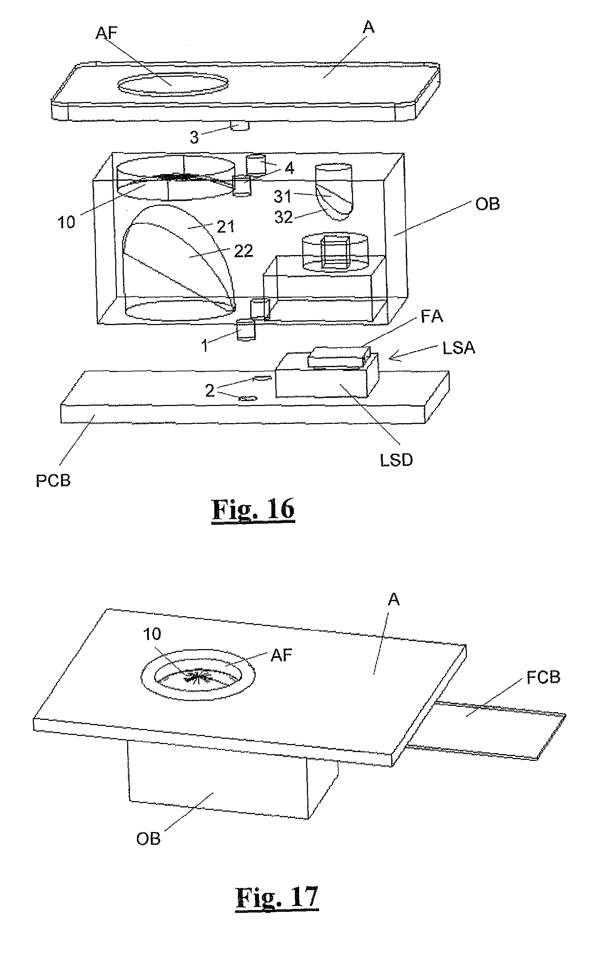

Die Fig. 16 zeigt die Lichtmessvorrichtung in einer explodierten Darstellung, wobei insbesondere die Komponenten des Optikblocks OB deutlich zu erkennen sind. Ferner ist in der Figur 16 ein Ausschnitt der oberen Abdeckung A einer Tastaturplatte eines Notebook Rechners zu erkennen, in welche die Lichtmessvorrichtung eingebaut zu werden geeignet bzw. bestimmt ist. Die Abdeckung A weist ein Messfenster AF auf, durch welches bei geschlossenem Rechner Messlicht vom auszumessenden LCD-Monitor des Rechners in die Eingangslinse 10 des Optikblocks gelangt. Die Abdeckung ist ferner an ihrer Unterseite mit Positionierungsstiften 3 versehen, welche in Positionierungslöcher 4 an der Oberseite des Optikblocks OB eingreifen und dadurch für eine definierte Positionsausrichtung der Lichtmessvorrichtung zur Abdeckung A sorgen.

Die integrierte Ausbildung der optischen Komponenten der Lichtmessvorrichtung in einen gemeinsamen Optikblock ermöglicht eine besonders günstige Herstellung z.B. durch Spritzgiessen, wobei nur ein verhältnismässig einfaches Spritzgusswerkzeug (Form) ohne Schieber erforderlich ist. Durch Ausnutzung der internen Totalreflexion entfällt die aufwändige Verspiegelung von Reflexionsflächen. Die Präzision der optischen Komponenten im Optikblock ist durch die Präzision der Giesswerkzeuge (Formteile) gegeben und kann dadurch einfach und reproduzierbar hoch gehalten werden.

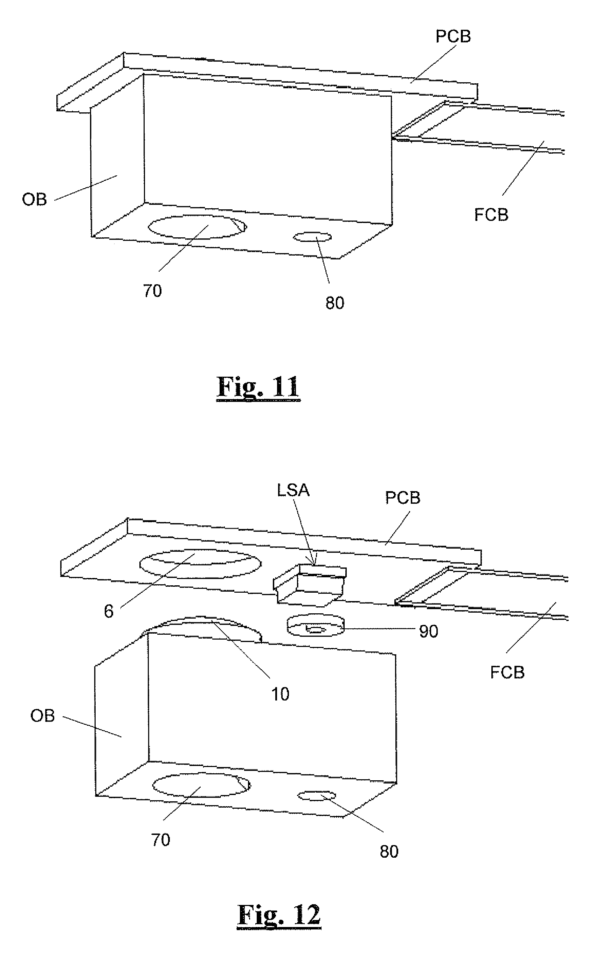

Die Figuren 8-12 und 17 zeigen ein als Hinterbauvariante bezeichnetes zweites Ausführungsbeispiel der erfindungsgemässen Lichtmessvorrichtung. Bei dieser Hinterbauvariante ist der Strahlengang ebenfalls zweimal, aber im Wesentlichen U-förmig gefaltet, so dass Eingang und Ausgang des Optikblocks OB beide auf der Oberseite des letzten liegen. Ausserdem ist die Eingangslinse 10 erhaben angeordnet, so dass sie etwas aus der Oberfläche des Optikblocks herausragt.

Die die lichtelektrische Wandleranordnung LSA tragende Leiterplatte PCB befindet sich an der Oberseite des Optikblocks OB und weist zusätzlich eine Öffnung 6 auf, durch welche die Eingangslinse 10 hindurchgreift. Anstatt der Öffnung 6 kann die Leiterplatte ganz einfach auch etwas kürzer ausgebildet sein, so dass sie die Eingangslinse nicht überdeckt. Mit Ausnahme der etwas anderen gegenseitigen Anordnung sind alle Komponenten des Optikblocks OB aufbau- und funktionsmässig gleich wie beim ersten Ausführungsbeispiel (Aufbauvariante) und deshalb auch mit den gleichen Bezugszeichen versehen. Eine weitere Erläuterung erübrigt sich deshalb.

Wie die Fig. 17 verdeutlicht, erfolgt der Einbau dieser Hinterbauvariante der Lichtmessvorrichtung in die Tastaturplatte eines Notebook Rechners hängend an der Abdeckung A der letzteren, wobei lediglich der Optikblock OB in das Innere der Tastaturplatte hineinragt. Auch hier sind am Optikblock oder an der Leiterplatte sowie an der Abdeckung A (nicht dargestellte) Ausrichtungs- und Fixiermittel vorgesehen, so dass örtliche Justierungen entfallen. Durch die Anordnung der Leiterplatte PCB an der Oberseite des Optikblocks ergibt sich ausserdem eine besonders günstige Kabelführung (flexible Leiterbahn FCB).

Prinzipiell wäre es möglich, den Strahlengang im Optikblock auch nur ein einziges Mal zu falten, wobei sich ein L-förmiger Strahlengang ergäbe und der Ausgang des Optikblocks seitlich zu liegen käme. Bei einer solchen, etwas einfacheren Konfiguration wären jedoch die Bedingungen der Totalreflexion nicht erfüllt und die Spiegelflächen müssten verspiegelt werden. Ausserdem wäre die seitliche Lage der Wandleranordnung und der sie tragenden Leiterplatte ungünstig für den Einbau in eine Tastaturplatte.

Bei einer integrierten Optik wie dem vorstehend beschriebenen Optikblock besteht das Risiko von Mehrfachreflexionen innerhalb des Blocks und die Gefahr, dass Umgebungslicht auf unerwünschten Kanälen in den Block eindringt. Es ist deshalb von Vorteil, gewisse Oberflächen schwarz bzw. absorbierend zu machen, sei es durch einen Überzug durch schwarze Farbe (eventuell teuer in der Fertigung, Abdecken erforderlich), sei es durch Zweikomponenten-Spritzgussverfahren, wo die schwarze Schicht in der Spritzgussmaschine aufgespritzt wird (teures Werkzeug), sei es durch einige weitere Teile in schwarz, die dann mit dem transparenten Teil assembliert werden (Teile sind nicht in Kontakt, dadurch tritt weiterhin interne Totalreflexion auf).

Bei den vorstehenden Ausführungsbeispielen ist die lichtelektrische Wandleranordnung LSA bzw. deren Sensor LSD auf einer Leiterplatte PCB montiert und diese mittels Ausrichtungselementen (Stifte, Löcher) zum Optikblock OB positioniert. Alternativ kann die Wandleranordnung bzw. deren Sensor aber auch direkt an der Austrittsfläche angeklebt werden, wodurch alle mechanischen Toleranzen vermieden werden. In diesem Falle wird vorteilhafterweise eine flexible Leiterplatte eingesetzt.

Wie schon erwähnt, sind die Lichtmessvorrichtung und das Zielgerät, in welches der Fühler einzubauen bestimmt ist, vorzugsweise mit zusammenwirkenden Ausrichtungs- und Fixiermitteln versehen. Dieselben Ausrichtungs- und Fixiermittel an der Lichtmessvorrichtung können identisch auch bei der Kalibrationseinrichtung der Vorrichtung in der Fertigung verwendet werden, so dass der Fühler in präziser, reproduzierbarer und identischer Ausrichtung wie im Zielgerät kalibriert wird. Insbesondere wird bei der Kalibration mit Licht identischer Polarisation, wie sie im Zielgerät auftritt, gearbeitet.

Die Wandleranordnung LSA bzw. deren Sensor LSD kann je nach Anwendungsanforderung verschieden ausgebildet sein. Für die Ausmessung eines Rechner-Monitors ist eine monochromatische Auslegung der Lichtmessvorrichtung ausreichend, weil die einzelnen Farben ja durch entsprechende Ansteuerung des Monitors selbst getrennt werden können. Für diese Einsatzzwecke genügt also ein monochromatischer (schwarz-weiss) Sensor LSD, Farbfilter können entfallen. Ein geeigneter monochromatischer Sensor LSD ist z.B. der Typ TSL 237T der Firma Taos oder auch ein handelsüblicher Umgebungslichtsensor mit Augenempfindlichkeitscharakteristik.

Falls die Lichtmessvorrichtung farbtauglich sein soll, muss auch die lichtelektrische Wandleranordnung LSA farbtauglich ausgelegt sein. Dazu kann einerseits ein direkt farbtauglicher Sensor oder anderseits eine Kombination von monochromatischen Sensoren mit entsprechenden Farbfiltern eingesetzt werden.

Beispiele für farbtaugliche Sensoren sind ein RGB-Sensor des Typs Taos 230 oder ein Farbsensor des Typs Foveon X3 oder ein farbtauglicher Standard-CMOS- oder CCD-Videokamerachip mit integrierten Filtern speziell in Bayer Konfiguration. Bei Verwendung eines Kamerachips (zweidimensionalen Sensorfelds mit einer Vielzahl von Sensorelementen) braucht natürlich nur die (örtlich) integrale Farbinformation ausgewertet zu werden.

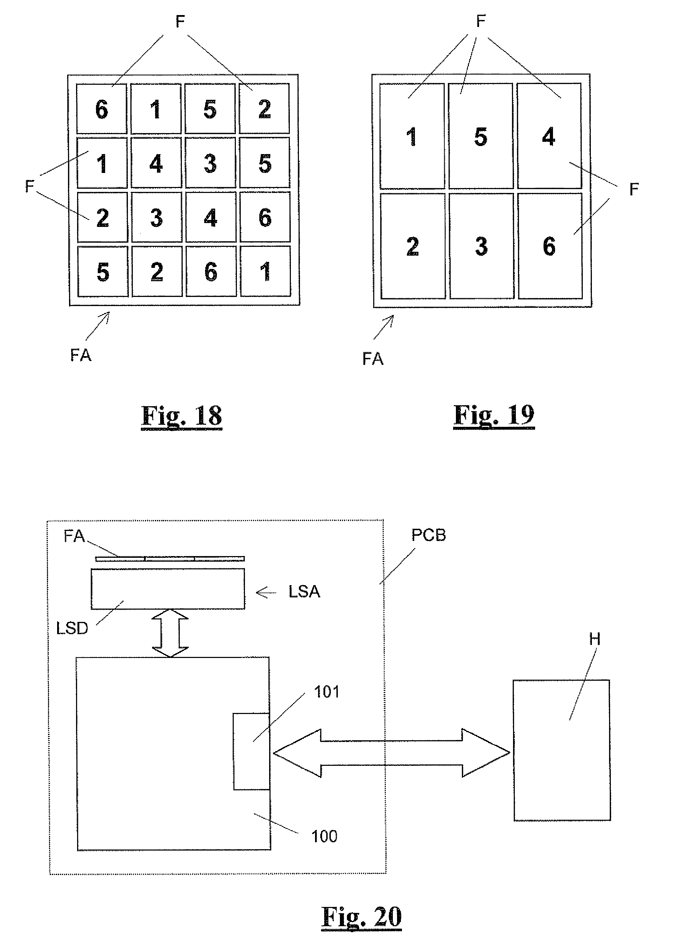

Im Falle der Implementierung der Wandleranordnung LSA als Kombination einer diskreten Farbfilteranordnung FA mit einem monochromatischen Sensor LSD kommen als Sensor eine Anzahl von individuellen oder integrierten Sensorelementen in Frage. Vorteilhaft ist z.B. der Einsatz eines monochromatischen Flächensensors in Form eines zweidimensionalen CMOS-Sensorfelds in Kombination mit einer Filteranordnung FA in Form eines Farbfilterfelds, wie es z.B. in den Figuren 18 und 19 dargestellt ist. In Fig. 18 umfasst die Filteranordnung FA sechzehn in einem Schachbrettmuster angeordnete dichroitische Einzelfarbfilter F mit insgesamt 6 unterschiedlichen Filtercharakteristiken. Einzelfarbfilter F mit der gleichen Durchlasscharakteristik sind durch gleichlautende Ziffern 1-6 symbolisiert. Die gesamte Filteranordnung FA misst etwa 1x1 mm². Die Filteranordnung FA der Fig. 19 ist etwas einfacher gestaltet, indem sie lediglich sechs Einzelfilter F mit jeweils unterschiedlicher Filtercharakteristik umfasst. Die Einzelfarbfilter F bzw. deren Durchlasscharakteristiken sind vorzugsweise im Hinblick auf die optimierte Berechnung der farbmetrische Grössen XYZ oder Lab gewählt. Näheres dazu ist dem Fachmann bekannt und bedarf deshalb keiner weiteren Erläuterung.

Wenn anstelle eines normalen farbtauglichen Sensors ein spektraler Sensor verwendet wird, erhöhen sich die Anwendungsmöglichkeiten der Lichtmessvorrichtung nochmals erheblich. Bevorzugt könnte zum Beispiel ein on-chip-Spektralsensor in MEMS (micro-electromechanical systems) oder MOEMS (micro-opto-electromechanical systems) Technologie eingesetzt werden.

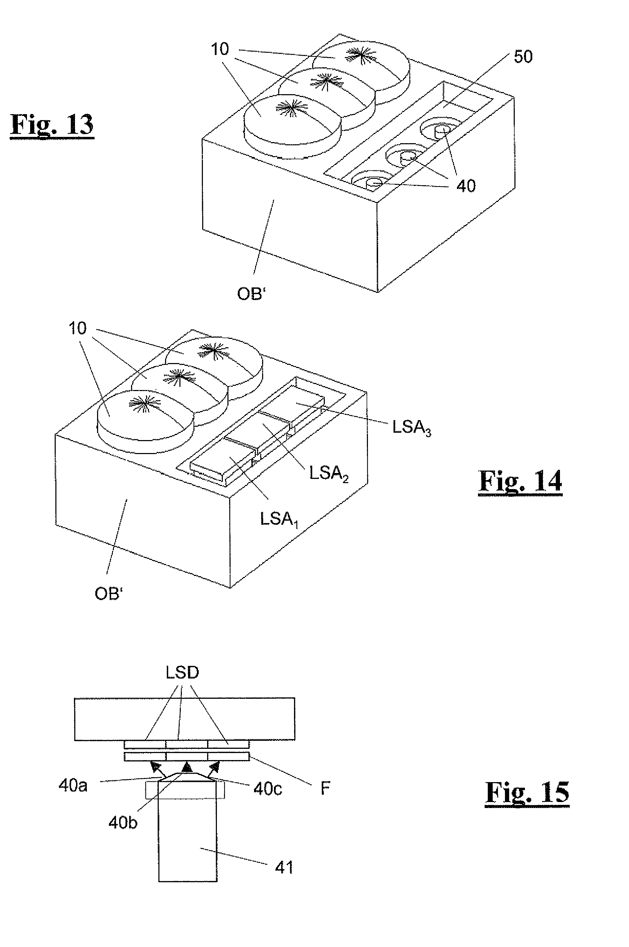

Die Farbtauglichkeit der Lichtmessvorrichtung kann auch dadurch erreicht werden, dass drei oder mehr durch unterschiedliche Farbfilter auf unterschiedliche Farbkanäle sensibilisierte Wandleranordnungen LSA vorgesehen sind. Gemäss dem in den Figuren 13 und 14 dargestellten weiteren Ausführungsbeispiel der Lichtmessvorrichtung ist diese dazu als Ganzes dreikanalig ausgelegt, d.h. sie umfasst örtlich nebeneinander drei identische Optikanordnungen mit Eingangslinse, Umlenkanordnung, Blendenmitteln und Austrittsfläche sowie drei Wandleranordnungen LSA₁, LSA₂ und LSA₃. Die drei Optikanordnungen sind in einem gemeinsamen Optikblock OB' integriert, und die drei Wandleranordnungen sind auf einer nicht dargestellten gemeinsamen Leiterplatte montiert. In Fig. 13 ist der Optikblock OB' ohne Wandleranordnungen dargestellt, in Fig. 14 sind die Wandleranordnungen eingezeichnet.

Die in den Figuren 13 und 14 dargestellte Variante der Lichtmessvorrichtung ist für manche Einsatzzwecke möglicherweise zu voluminös. Eine Verringerung des Bauvolumens kann dadurch erreicht werden, dass der Optikblock OB nur einkanalig ausgelegt ist, dafür aber das Messlicht auf einen Punkt fokussiert und dann verteilt und separaten Wandleranordnungen zugeführt wird. Die Fig. 15 skizziert, wie dies gemäss einem weiteren Aspekt der Erfindung realisiert werden kann.

Bei dieser weiteren Variante der Lichtmessvorrichtung ist die Lichtaustrittsfläche am Lichtausgang 41 facettiert ausgebildet, wobei die drei Facetten mit 40a, 40b und 40c bezeichnet sind. Das im Lichtausgang örtlich durchmischte Messlicht wird durch die Facettierung der Austrittsfläche räumlich aufgespalten und auf drei benachbarte Wandleranordnungen mit je einem Sensor LSD und einem Farbfilter F geleitet.

Die Fig. 20 schliesslich zeigt ein beispielsweises Prinzipschema der elektronischen Komponenten der Lichtmessvorrichtung.

Auf der Leiterplatte PCB ist die Wandleranordnung LSA mit dem Sensor LSD und der vorgeschalteneten Filteranordnung FA montiert. Ferner befindet sich auf der Leiterplatte ein Mikroprozessor 100, der den Sensor ansteuert und ausliest und unter anderem auch eine Schnittstelle 101, z.B. eine USB-Schnittstelle implementiert. Über diese Schnittstelle 101 und das flexible Leiterband FCB kann der Mikroprozessor 100 und damit die Lichtmessvorrichtung als solche mit einem übergeordneten Rechner H (Host) kommunizieren, d.h. z.B. Befehle ausführen und Messdaten übertragen. Der übergeordnete Rechner H kann irgendein externer Rechner sein, im Falle des Einbaus der Lichtmessvorrichtung in ein Zielgerät ist es natürlich der im Zielgerät befindliche Rechner. Die Ansteuerung von Sensoren in Farhmessgeräten sowie die Auswertung der von diesen erzeugten elektrischen Messsignale sowie die Kommunikation mit einem übergeordneten externen Rechner ist in der Farbmesstechnik allgemein bekannt und bedarf daher für den Fachmann keiner näheren Erläuterung.

## Patentansprüche

1. Lichtmessvorrichtung zur Ausmessung eines leuchtenden Messobjekts, insbesondere eines Bildschirms, mit einer lichtelektrischen Wandleranordnung (LSA), welche auf sie auftreffendes Messlicht in entsprechende elektrische Signale umwandelt, und mit einer Optikanordnung (OB), welche von einem Messfleck des Messobjekts unter einem definierten Winkelbereich um die Normale auf den Messfleck ausgehendes Messlicht auf die Wandleranordnung (LSA) führt, **dadurch gekennzeichnet, dass** die Optikanordnung eingangsseitig eine fokussierende optische Fläche (10) und ausgangsseitig eine der aktiven Fläche der Wandleranordnung (LSA) grössenmässig angepasste und dieser zugewandte Austrittsfläche (40) und dazwischen eine Umlenkanordnung (20; 30) umfasst, so dass der Strahlengang des Messlichts zwischen der fokussierenden optischen Fläche (10) und der Austrittsfläche (40) gefaltet verläuft, wobei die Austrittsfläche (40) in oder nahe der Brennebene der fokussierenden optischen Fläche (10) angeordnet ist und Blendenmittel (61; 90) vorgesehen sind, um ausserhalb des definierten Winkelbereichs in die fokussierende optische Fläche (10) eintretendes Messlicht von der Wandleranordnung (LSA) fernzuhalten, und dass die fokussierende optische Fläche (10), die Umlenkanordnung (20; 30) und die Austrittsfläche (40) integriert im Wesentlichen durch einen aus transparentem Kunststoff bestehenden Optikblock (OB) gebildet sind.

2. Vorrichtung nach Anspruch 1, **dadurch gekennzeichnet, dass** die Umlenkanordnung (20; 30) durch mindestens eine freigestellte Spiegelfläche (21,22; 31,32) im Optikblock (OB) gebildet ist.

3. Vorrichtung nach Anspruch 2, **dadurch gekennzeichnet, dass** die Spiegelflächen (21,22; 31,32) so ausgebildet und angeordnet sind, dass der Strahlengang durch interne Totalreflexion an den Spiegelflächen umgelenkt wird.

4. Vorrichtung nach einem der vorangehenden Ansprüche, **dadurch gekennzeichnet, dass** die Umlenkanordnung mindestens einen Doppelspiegel (21,22; 31,32) mit zwei zueinander senkrecht stehenden Spiegelflächen (21,22; 31,32) aufweist.

5. Vorrichtung nach einem der vorangehenden Ansprüche, **dadurch gekennzeichnet, dass** der Strahlengang mindestens einmal, vorzugsweise zweimal gefaltet ist.

6. Vorrichtung nach einem der vorangehenden Ansprüche, **dadurch gekennzeichnet, dass** der Strahlengang im Wesentlichen L-förmig, vorzugsweise im Wesentlichen Z- oder U-förmig gefaltet ist.

7. Vorrichtung nach einem der vorangehenden Ansprüche, **dadurch gekennzeichnet, dass** im Optikblock (OB) ausgangsseitig ein im wesentlichen stabförmiger Lichtausgang (41) ausgebildet ist, an dessen freien Ende sich die Austrittsfläche (40) befindet.

8. Vorrichtung nach einem der vorangehenden Ansprüche, **dadurch gekennzeichnet, dass** die Blendenmittel durch eine die Austrittsfläche (40) umgebende Ringblende (61; 90) gebildet sind.

9. Vorrichtung nach Anspruch 8, **dadurch gekennzeichnet, dass** die Ringblende durch eine Beschichtung der Umgebung der Austrittsfläche (40) mit Licht absorbierendem Material oder durch ein die Austrittsfläche (40) umschliessendes Einlegeteil (90) aus Licht absorbierendem Material oder durch eine Totalreflexion bewirkende Facettierung der Umgebung der Austrittsfläche (40) gebildet ist.

10. Vorrichtung nach einem der vorangehenden Ansprüche, **dadurch gekennzeichnet, dass** der Optikblock (OB) eine Aussparung (50) zur Aufnahme der Wandleranordnung (LSA) aufweist.

11. Vorrichtung nach einem der vorangehenden Ansprüche, **dadurch gekennzeichnet, dass** der Optikblock (OB) einen IR-Filter aufweist oder als Ganzes aus einem IR zumindest teilweise absorbierenden Material besteht.

12. Vorrichtung nach einem der vorangehenden Ansprüche, **dadurch gekennzeichnet, dass** der Optikblock (OB) Elemente (1) zur Positionsausrichtung der Wandleranordnung (LSA) und/oder an einer die Lichtmessvorrichtung aufnehmenden Einrichtung aufweist.

13. Vorrichtung nach einem der vorangehenden Ansprüche, **dadurch gekennzeichnet, dass** die Wandleranordnung (LSA) einen lichtelektrischen Sensor (LSD) mit mehreren Sensorelementen und eine Farbfilteranordnung (FA) zur Sensibilisierung der Sensorelemente des Sensors (LSD) auf verschiedene Farbkanäle aufweist.

14. Vorrichtung nach einem der vorangehenden Ansprüche, **dadurch gekennzeichnet, dass** mehrere, auf unterschiedliche Farbkanäle ausgelegte Wandleranordnungen (LSA₁, LSA₂,LSA₃) vorgesehen sind und dass im Optikblock (OB) Aufteilmittel (40, 40b, 40c) vorgesehen sind, um das aus der Austrittsfläche (40) austretende Messlicht auf die einzelnen Wandleranordnungen (LSA₁, LSA₂,LSA₃) aufzuteilen.

15. Vorrichtung nach Anspruch 14, **dadurch gekennzeichnet, dass** die Aufteilmittel durch eine facettierte Ausbildung (40, 40b, 40c) der Austrittsfläche (40) gebildet sind.
